# EUROPÄISCHE PATENTANMELDUNG

(11) **EP 1 176 321 A1**
(43) Veröffentlichungstag der Anmeldung: **30.01.2002**
(21) Anmeldenummer: 00116387.2
(22) Anmeldetag: 28.07.2000
(51) Int. Cl.: F16B 13/14

(54) **Ankersystem**

(71) Anmelder: B+Btec BV, 4762 AH Zevenbergen (NL)
(72) Erfinder: van den Bogaart, Robert Wilhelm, 5301 NW Zaltbommel (NL)
(74) Vertreter: Lempert, Jost, Dipl.-Phys. Dr. rer.nat.

(57) **Zusammenfassung**

Zur zuverlässigeren Sicherung eines Ankers in einem Bohrloch im Fels oder in einem Betonteil auch bei Auftreten von Rissen in demselben sieht die Erfindung ein Ankersystem zur Verankerung in einem Bohrloch im Fels oder in einem Betonteil oder dgl. mit einer ein Gewinde (7) aufweisenden Ankerstange (2) mit einer Gewindehülse (3) und mit einer Verbundmasse enthaltenen Patrone (21) vor, wobei die Gewindehülse (3) sich zu ihrem der Ankerstange (2) abgewandten freien Ende (12) konisch erweiternd ausgebildet ist, bei dem die Gewindehülse (3) außenseitig beschichtet ist.

## Beschreibung

Die Erfindung betrifft ein Ankersystem zur Verankerung in einem Bohrloch im Fels oder in einem Betonteil oder dgl. mit einem ein Gewinde aufweisenden Ankerstange mit einer Gewindehülse und mit einer Verbundmasse enthaltenden Patrone, wobei die Gewindehülse sich zu ihrem der Ankerstange abgewandten freien Ende konisch erweiternd ausgebildet ist.

Ein gattungsgemäßes Ankersystem ist aus der EP 697 530 A1 bekannt. Das bekannte Ankersystem hat sich als weitgehend sicher und zuverlässig herausgestellt. Wenn in dem Material, wie Fels oder Beton, in dem der Anker verankert ist Risse auftreten, so hat sich allerdings in Einzelfällen ergeben, dass aufgrund der guten Haftung der Verbundmasse mit der Hülse und der so auf die ausgetrocknete Verbundmasse in einem solchen Fall ausgeübten Zugkräfte, sich in Einzelfällen der Verbund zwischen Verbundmasse und umgebenden Beton- oder Felsmaterial löst. Hierdurch kann eine Lockerung des Ankers erfolgen.

Der Erfindung liegt daher die Aufgabe zugrunde unter Vermeidung der vorgenannten Nachteile den sicheren Halt des Ankers in einem Bohrloch weiter zu verbessern und insbesondere ein Lösen des Ankers aus dem Bohrloch sicher und zuverlässig auszuschließen.

Erfindungsgemäß wird die genannte Aufgabe bei einem Ankersystem der eingangs genannten Art dadurch gelöst, dass die Gewindehülse außenseitig beschichtet ist.

In bevorzugter Ausbildung kann dabei weiterhin zusätzlich vorgesehen sein, dass die Beschichtung aus Kunststoff besteht. Die Beschichtung ist eine Kunststoffbeschichtung, vorzugsweise aus Polytetrafluorethen (PTFE).

Die Beschichtung ist eine Oberflächenhaftung reduzierte, insbesondere eine mit dem Harz und der Verbundmasse inkompatible Beschichtung. Hierdurch wird erreicht, dass die Oberflächenhaftung zwischen Verbundmasse und Beschichtung der Hülse und damit zwischen der Verbundmasse der Hülse bzw. eine solche vermieden wird. Hierdurch ergibt sich weiterhin, dass, wenn aufgrund von Rissen oder dgl. im umgebenden Fels- oder Betonmaterial Zugspannungen auf die Verbundmasse ausgeübt werden, diese sich dann eher vom Anker löst, aber der innige Verbund zwischen der Verbundmasse und dem umgebenden Material aus Fels oder Beton aufrecht erhalten bleibt. Ein Lösen des Verbundes zwischen Verbundmasse und Anker ist im Hinblick auf die sich zu ihrem vorderen freien Ende hin konisch erweiternde Hülse unproblematisch, da diese auch in diesem Falle weiterhin, gegebenenfalls lediglich unter Zurückziehen von Bruchteilen von Millimetern zuverlässig formschlüssig in der ausgehärteten Verbundmasse gehalten wird.

Die Beschichtung befindet sich dabei insbesondere und vorteilhafterweise auf glatten Bereichen von Hülse und gegebenenfalls Ankerstange, also Bereichen, die selbst nicht mit einem Gewinde versehen sind.

In weiterer bevorzugter Ausgestaltung ist vorgesehen, dass die Hülse auf ihrer Außenseite, zumindest in ihrem vorderen Bereich ein dem Gewinde der Ankerstange entgegen gerichtetes Gewinde aufweist. Durch dieses Außengewinde wird beim Eintreten des Ankers in das Bohrloch, nach Zerstören der die Verbundmasse enthaltenen Patrone, eine Aufrauhung der Innenwandung des Bohrlochs erreicht und damit zusätzlich der Verbund zwischen umgebenden Beton- oder Felsmaterial und Verbundmasse nach Aushärten der letzteren verbessert.

Das Außengewinde der Hülse ist dem Gewinde der Ankerstange, mit dem diese in die Hülse eingeschraubt ist, entgegengerichtet. Hierdurch wird erreicht, dass beim Eintreten der Ankerstange mit einer solchen Drehrichtung, dass sie nicht aus der Hülse herausgedreht wird, sondern beim Drehen die Hülse mitdreht, während des Setzens, d.h. Einführen der Ankerstange in das Bohrloch, die Verbundmasse fein verteilt wird, so dass keine Beschädigung der Beschichtung der Hülse erfolgt und darüber hinaus die Verbundmasse zuverlässig weiter in das Bohrloch eingefördert wird. Dies wird weiterhin dadurch unterstützt, dass die Hülse an ihrer Außenseite achsparallele Nuten, insbesondere im Bereich ihres Außengewindes aufweist. Es ist weiterhin vorgesehen, dass die Hülse an ihrem vorderen freien Ende durch eine zentrale Spitze Nase überragt wird, die im Boden des Bohrlochs in das umgebende Fels- oder Betonmaterial eindringt und dadurch eine Zentrierung bewirkt.

Weitere bevorzugte Ausgestaltungen sehen vor, dass am rückwärtigen Bereich der Ankerstange ein Kunststoffring vorgesehen ist, wobei insbesondere der Kunststoffring auf seiner Außenseite achsparallele Nuten aufweist. Durch den Kunststoffring kann die Kontrolle der genauen Setztiefe und die sichere Setzung des Ankers überwacht werden, während die achsparallelen Kanäle im Ringteil ein Durchfließen der Verbundmasse nach außen ermöglichen und damit auch eine Setz- und Aushärtungskontrolle ermöglicht wird.

Um eine Beschädigung der Außenbeschichtung von Gewindehülse und gegebenenfalls Ankerstange auszuschließen, ist in weiterer bevorzugter Ausgestaltung vorgesehen, dass die die Verbundmasse enthaltene Patrone auf ihrer Außenseite im rückwärtigen Bereich mit einer Einschnürung als Sollbruchstelle versehen ist und insbesondere dass die in der Patrone enthaltene Verbundmasse einen Anteil an Quarzpartikeln weniger als 60 % bezogen auf die Harzmasse aufweist. Hierdurch ist der Quarzanteil gegenüber dem Quarzanteil herkömmlicher Verbundmassen wesentlich reduziert, womit die genannte Beschädigungsgefahr der Beschichtung eben vermindert wird. Es hat sich herausgestellt, dass die Reduzierung des Anteils der Quarzpartikel keine Reduzierung des sicheren Halts des gesamten Anker- und Verbundsystems in einem Bohrloch bedingt.

Sowohl Ankerstange als auch konische Hülse bestehen aus Metall, wobei insbesondere für die Ankerstange unterschiedliche Stahlqualitäten eingesetzt werden. Die Ankerstange kann in verschiedenen Längen vorgesehen sein.

Weitere Vorteile und Merkmale ergeben sich aus den Ansprüchen, aus der nachfolgenden Beschreibung, in der ein Ausführungsbeispiel der Erfindung unter Bezugnahme auf die Zeichnungen im einzelnen erläutert ist. Dabei zeigt:
- Fig. 1: die Darstellung eines erfindungsgemäßen Ankers mit Gewindehülse und Kunststoffring in einem Bohrloch ohne Darstellung der Verbundmasse;
- Fig. 2: eine vergrößerte Darstellung der Gewindehülse im Schnitt;
- Fig. 3: eine vergrößerte Darstellung des Kunststoffrings;
- Fig. 4: die Darstellung einer die Verbundmasse enthaltenen Patrone; und
- Fig. 5: die Sicherung eines Ankers gemäß Fig. 1 in einem Bohrloch mittels ausgehärteter Verbundmasse.

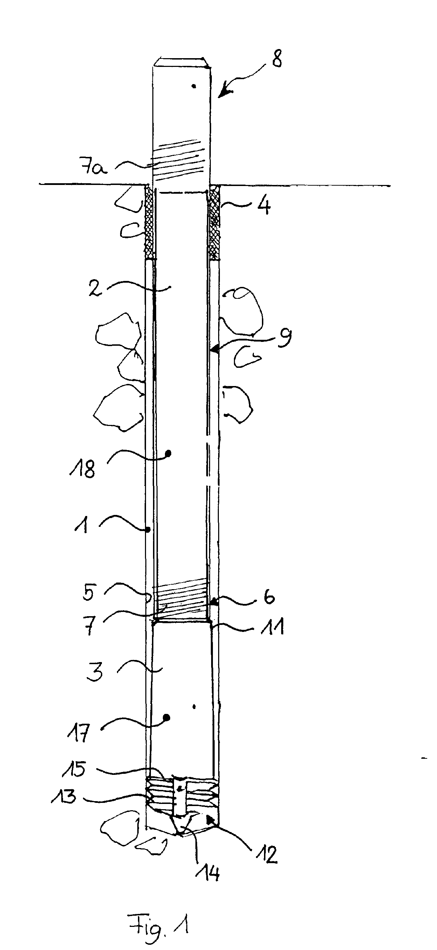

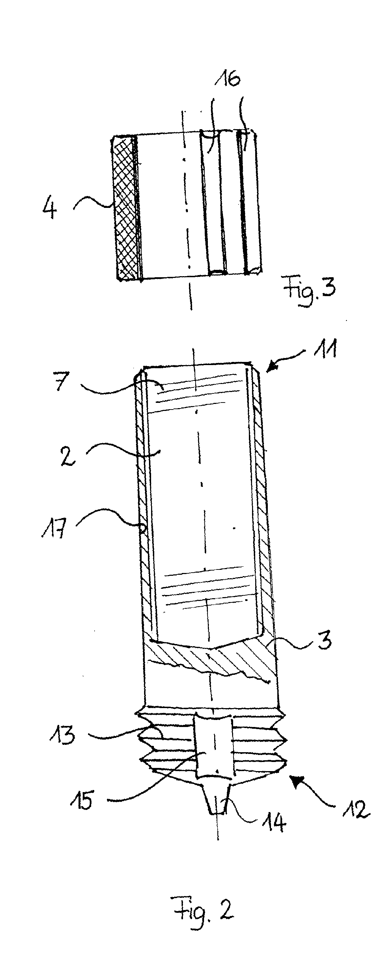

Das erfindungsgemäße Ankersystem weist zunächst einen Anker 1 auf. Der Anker 1 besteht aus einer Ankerstange 2, einer Hülse aus Metall 3 und einem rückwärtigen Kunststoffring 4.

Die Ankerstange 2 ist zumindest in ihrem vorderen, in das Bohrloch 5 ragenden Bereich 6 mit einem Gewinde 7, im dargestellten Ausführungsbeispiel einem üblichen Rechtsgewinde versehen. Am rückwärtigen Ende 8 weist die Ankerstange 2 ebenfalls ein Gewinde 7a auf, dessen Orientierung dem des Gewindes 7 entspricht, also im dargestellten Ausführungsbeispiel wiederum ein Rechtsgewinde ist. Im mittleren Bereich 9 ist die dargestellte Ankerstange 2 glatt ausgebildet. Eine Ankerstange 2 kann allerdings auch ein sich über die gesamte Länge erstreckendes einheitliches Gewinde aufweisen.

Die Hülse 3 ist eine Metallhülse und vorzugsweise aus Stahl, ebenso wie die Ankerstange 2 aus Stahl besteht.

Die Hülse 3 ist konusförmig ausgebildet und erweitert sich von ihrem rückwärtigen, der Ankerstange 2 zugewandten inneren Ende 11 zu ihrem vorderen, der Ankerstange 2 abgewandten freien Ende 12. Sie ist im Bereich des vorderen Endes 12 mit einem groben Außengewinde 13 versehen, dessen Steigung der des Gewindes 7 entgegengerichtet ist, im dargestellten Ausführungsbeispiel also ein Linksgewinde ist. Selbstverständlich weist die Hülse 3 ein mit dem Gewinde 7 zur Bildung einer Verschraubung zusammenwirkendes Innengewinde auf.

Die Hülse 3 wird an ihrem freien Ende 12 durch eine zentrale spitze Nase 14 überragt. Sie weist weiterhin im Bereich des Gewindes 13 achsparallele Nuten 15 auf.

Am rückwärtigen Ende 8 der Ankerstange 2, aber noch innerhalb des Bohrlochs 5 sitzt auf der Ankerstange 2 eine Kunststoffhülse 4 auf, die auf ihrer Außenseite mit achsparallelen Nuten 16 versehen ist.

Sowohl die Hülse 3 als auch die Ankerstange 2 weisen auf ihrer Außenseite zumindest und insbesondere in ihren mit Gewinde versehenen Bereichen Kunststoffbeschichtungen 17, 18, insbesondere aus Polytetrafluorethylen (PTFE) auf.

Zum erfindungsgemäßen Verbundsystem gehört weiter eine Verbundmasse enthaltene Patrone 21, die an ihrem rückwärtigen Ende 22 eine Einschnürung 23 als Sollbruchstelle aufweist. Die Verbundmasse weist im wesentlichen einerseits Harz andererseits Quarzpartikel auf. Die Patrone 21 mit ihrer Verbundmasse ist im wesentlichen entsprechend der EP 535 411 A1 ausgebildet, wobei die Partikelgröße der Quarteile bei 1,2 bis 1,8 mm liegt und insbesondere der Quarzanteil gegenüber dem Bekannten deutlich geringer ist und unter 60 %, vorzugsweise im Bereich von 20 bis 40 %, bezogen auf die Harzmasse beträgt. Als optimaler Wert hat sich ein Wert von ca. 25 % herausgestellt.

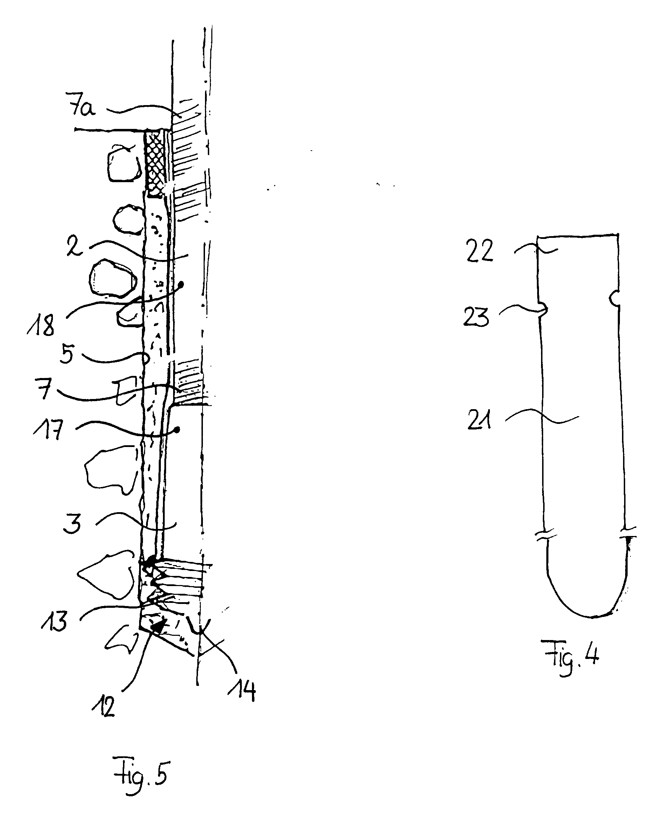

Durch die mit dem Harz der Verbundmasse nicht kompatible Kunststoffbeschichtung, insbesondere PTFE-Beschichtung 17,18 insbesondere der Hülse 3, aber auch der Ankerstange 2 wird bei Entstehen eines Risses oder dgl. aufgrund der Setzvorgänge des Betons oder des Felsgesteins, in dem der Anker eingebracht ist, bewirkt, dass aufgrund der entstehenden auf die ausgehärtete Verbundmasse einwirkenden Zugkräfte diese sich zuverlässig nicht von den umgebenden Beton- oder Steinmaterial löst, sondern mit diesen fest verbunden bleibt, da die Haftkräfte zu Hülse 3 und gegebenenfalls Anker 2 aufgrund der Beschichtung reduziert sind, so dass gegebenenfalls hier eine Lösung eintritt. Diese ist im Gegensatz zu einem Lösen des Verbundes zwischen Verbundmasse und Stein bzw. Beton unproblematisch, da der Anker aufgrund der sich konisch erweiternden Ausgestaltung der Hülse 3 trotz eines Lösens des Verbundes mit der Verbundmasse weiterhin formschlüssig in der ausgehärteten, fest mit dem Beton oder dem Stein verbundenen Verbundmasse gehalten wird, wie dies insbesondere der Fig. 5 entnehmbar ist.

Der Einsatz des erfindungsgemäßen Ankersystems geschieht folgendermaßen:

Zunächst wird mittels eines Bohrers, wie insbesondere eines Diamantbohrers, im das Ankersystem aufnehmenden Material, wie Beton oder Fels ein Bohrloch 5 gesetzt. Anschließend wird in das Bohrloch 5 eine Verbundmasse enthaltene Patrone 21 eingesteckt. Weiterhin wird der Anker 1 in das Bohrloch eingebracht, insbesondere eingeschlagen, wobei die Umhüllung der Patrone 21, insbesondere zunächst an ihrer Sollbruchstelle 23 zerstört wird, so dass die Verbundmasse austreten kann und sich gegebenenfalls vorhandene Zweikomponenten bei einer Zwei-Komponenten-Masse vermischen können. Zur besseren Vermischung wird der Anker 1 in das Bohrloch eingedreht, wobei das Außengewinde 13 einerseits die Innenwandung des Bohrlochs in ihrem vorderen Bereich aufrauht und damit die den erwähnten besseren Verbund zwischen umgebenen Material und Verbundmasse bewirkt und andererseits die Verbundmasse tief in das Bohrloch gefördert und gut durchmischt wird.

Durch den rückwärtigen Kunststoffring 4 wird das hinreichend tiefe Eindringen des Ankers 1 in das Bohrloch 5 kontrolliert.

Anschließend erfolgt das Aushärten der Verbundmasse, wobei dies anhand des durch die Kanäle 16 des Rings 4 ausgetretenden Verbundmassenanteils kontrolliert werden kann. Dabei erfolgt eine Kraftverbindung der Verbundmasse mit Hülse 3 und Anker 2 einerseits, darüber hinaus aber insbesondere eine innige kraft- und formschlüssige Verbindung zwischen schließlich ausgehärteter Verbundmasse und umgebenden Beton- oder Felsmaterial.

Im ausgehärteten Zustand werden die Lasten von der Ankerstange 2 über die Hülse 3 und die Verbundmasse in den Beton bzw. den Fels eingetragen. Hierdurch wird die Belastung tief in das Innere des Betons bzw. Fels übertragen, während deren rückwärtige äußere Bereich der Ankerstange 2 keine so feste Verbindung zwischen dieser und der Bohrlochwandung bedingt. Dieser Bereich ist aber dennoch durch ausgehärtete Verbundmasse in Form eines Zylindermantels ausgefüllt. Durch die Formgebung der Hülse, insbesondere ihre konische Ausführung und die Reduzierung der Haftung wird erreicht, dass im Falle eines Risses in der Zugführung des Betons Verbundmasse mit dem Beton bzw. Fels fest verbunden bleibt und der Anker weiterhin sicher in diesem gehalten wird, so dass auch bei einem solchen Riss bei der Verwendung des erfindungsgemäßen Ankers die Traglast in ausreichender Weise gehalten wird.

### Bezugszeichenliste

- 1: Anker
- 2: Ankerstange
- 3: Hülse
- 4: Kunststoffring
- 5: Bohrloch
- 6: Bereich
- 7, 7a: Gewinde
- 8: rückwärtiges Ende
- 9: mittlerer Bereich
- 11: innere Ende
- 12: freie Ende
- 13: Außengewinde
- 14: spitze Nase
- 15: achsparallele Nuten
- 16: achsparallele Nuten
- 17: Kunststoffbeschichtung
- 18: Kunststoffbeschichtung
- 21: Patrone
- 22: rückwärtige Ende
- 23: Einschnürung

## Patentansprüche

1. Ankersystem zur Verankerung in einem Bohrloch im Fels oder in einem Betonteil oder dgl., mit einer ein Gewinde (7) aufweisenden Ankerstange (2) mit einer Gewindehülse (3) und mit einer Verbundmasse enthaltenden Patrone (21), wobei die Gewindehülse (3) sich zu ihrem der Ankerstange (2) abgewandten freien Ende (12) konisch erweiternd ausgebildet ist, **dadurch gekennzeichnet, dass** die Gewindehülse (3) außenseitig beschichtet ist.

2. Ankersystem nach Anspruch 1, **dadurch gekennzeichnet, dass** auch die Ankerstange (2) mindestens in einem glatten Teilbereich außenseitig beschichtet ist.

3. Ankersystem nach Anspruch 1 oder 2, **dadurch gekennzeichnet, dass** die Beschichtung (17,18) aus Kunststoff besteht.

4. Ankersystem nach einem der Ansprüche 1 bis 3, **dadurch gekennzeichnet, dass** die Beschichtung aus Polytetrafluorethylen (PTFE) besteht.

5. Ankersystem nach einem der vorangehenden Ansprüche, **dadurch gekennzeichnet, dass** die Hülse (3) auf ihrer Außenseite, zumindest in ihrem vorderen Bereich (12) ein dem Gewinde (7) der Ankerstange (2) entgegen gerichtetes Gewinde (13) aufweist.

6. Ankersystem nach einem der vorangehenden Ansprüche, **dadurch gekennzeichnet, dass** die Hülse (3) an ihrer Außenseite achsparallele Nuten (15), insbesondere im Bereich ihres Außengewindes (13) aufweist.

7. Ankersystem nach einem der vorangehenden Ansprüche, **dadurch gekennzeichnet, dass** die Hülse (3) an ihrem vorderen freien Ende (12) durch eine zentrale spitze Nase (14) überragt ist.

8. Ankersystem nach einem der vorangehenden Ansprüche, **dadurch gekennzeichnet, dass** am rückwärtigen Bereich der Ankerstange (2) ein Kunststoffring (4) vorgesehen ist.

9. Ankersystem nach Anspruch 8, **dadurch gekennzeichnet, dass** der Kunststoffring (4) auf seiner Außenseite achsparallele Nuten (16) aufweist.

10. Ankersystem nach einem der vorangehenden Ansprüche, **dadurch gekennzeichnet, dass** die die Verbundmasse enthaltene Patrone (21) auf ihrer Außenseite im rückwärtigen Bereich (22) mit einer Einschnürung (23) als Sollbruchstelle versehen ist.

11. Ankersystem nach einem der vorangehenden Ansprüche, **dadurch gekennzeichnet, dass** die in der Patrone (21) enthaltene Verbundmasse einen Anteil an Quarzpartikeln weniger als 60 % bezogen auf die Harzmasse aufweist.

12. Ankersystem nach einem der vorangehenden Ansprüche, **dadurch gekennzeichnet, dass** die in der Patrone (21) enthaltene Verbundmasse einen Anteil an Quarzteilen von 20 bis 40 % bezogen auf die Harzmasse aufweist.

13. Ankersystem nach einem der vorangehenden Ansprüche, **dadurch gekennzeichnet, dass** die Partikelgröße der Quarzteilchen in der Verbundmasse zwischen 1,2 und 1,8 mm liegt.
